Europäisches Patentamt

European Patent Office

Office européen des brevets

(11) Numéro de publication: **0 040 994**
**B1**

# FASCICULE DE BREVET EUROPEEN

(45) Date de publication du fascicule du brevet: 13.02.85

(51) Int. Cl.⁴: **G 11 B 5/127,** G 11 B 5/23, G 11 B 5/187

(21) Numéro de dépôt: 81400433.9

(22) Date de dépôt: 20.03.81

(54) **Transducteur magnétique à entrefer de grande dimension variable pour la lecture ou l'écriture des informations d'un support magnétique.**

(30) Priorité: 02.04.80 FR 8007453

(43) Date de publication de la demande:
02.12.81 Bulletin 81/48

(45) Mention de la délivrance du brevet:
13.02.85 Bulletin 85/07

(84) Etats contractants désignés:
DE GB IT

(56) Documents cités:
FR-A-2 150 335
FR-A-2 158 196
FR-A-2 297 475
GB-A- 746 537
US-A-3 353 168

IBM TECHNICAL DISCLOSURE BULLETIN, vol. 4, no. 10, mars 1962, page 29 Armonk, New York, U.S.A. F.L. ROGERS Jr.: "Write-wide read-narrow magnetic head"
PATENTS ABSTRACTS OF JAPAN, vol. 1, no. 114, 30 septembre 1977, page 4336 E 77
PATENTS ABSTRACTS OF JAPAN, volume 1, no. 114, 30 septembre 1977 page 4335 E 77

(73) Titulaire: COMPAGNIE INTERNATIONALE POUR L'INFORMATIQUE CII - HONEYWELL BULL (dite CII-HB)
94, avenue Gambetta
F-75020 Paris (FR)

(72) Inventeur: Desserre, Jacques
12, bis rue de la Mairie
Orcemont F-78120 Rambouillet (FR)
Inventeur: Helle, Michel
33, grande rue
F-78770 Marcq (FR)
Inventeur: Lazzari, Jean-Pierre
29, rue André Thomas
F-78490 Montfort l'Amaury (FR)

(74) Mandataire: Gouesmel, Daniel
94, avenue Gambetta
F-75020 Paris (FR)

## Description

La présente invention concerne les transducteurs magnétiques. Elle est notamment applicable à la lecture et l'écriture des informations contenues sur un support magnétique d'enregistrement, tels que les disques magnétiques, rigides ou souples et les bandes.

On sait, que pour enregistrer (on dit encore écrire) des informations sur un support magnétique d'enregistrement, on crée sur (ou dans) ce support, en une pluralité d'endroits parfaitement déterminés de celui-ci, au moins une modification de l'une de ses propriétés magnétiques, ce qui se traduit par au moins une variation de la grandeur physique qui caractérise ladite propriété. La lecture de ces informations s'effectue en détectant ces modifications, en transformant la variation de la grandeur physique définit plus haut en une variation d'une autre grandeur physique qui est le plus souvent une variation de la tension ou du courant d'un signal électrique.

Pour mieux comprendre l'objet de la présente invention, il est nécessaire de faire les quelques rappels de magnétisme suivants:

— pour magnétiser (on dit également aimanter), un matériau magnétique à l'intérieur duquel l'induction magnétique est faible, on le soumet d'abord à un champ magnétique positif $H_s$ dont l'intensité est suffisante pour que la matériau soit saturé, c'est-à-dire que l'induction magnétique dans le matériau atteigne une valeur limite $B_s$. On annule le champ magnétique extérieur. Il subsiste alors dans le matériau une induction magnétique non nulle appelée "induction rémanente" $B_r$, caractéristique du matériau. On appelle "perméabilité magnétique initiale du matériau" le rapport B/H entre l'induction et le champ magnétique lorsque l'on fait tendre le champ H vers zéro, et ce sur la courbe de première aimantation.

On rappelle d'autre part qu'un matériau magnétiquement anisotrope, présente deux directions privilégiées de magnétisation (ou d'aimantation) perpendiculaires l'une à l'autre. L'une d'elles est appelée "direction de facile aimantation" alors que l'autre est appelée "direction de difficile aimantation". La perméabilité initiale du matériau dans la direction de difficile aimantation est très supérieure à la perméabilité initiale du matériau dans la direction de facile aimantation. La propriété magnétique utilisée pour enregistrer des informations sur un support magnétique est définie par exemple soit par l'absence ou la présence d'une induction magnétique rémanente, soit par une variation quelconque de l'aimantation.

On sait que les disques magnétiques portent les informations sur des pistes d'enregistrement concentriques circulaires qui ont une largeur radiale n'excédant pas quelques centièmes de millimètres et couvrent généralement la majeure partie de leurs deux faces.

Les bandes magnétiques portent les informations sur des pistes parallèles à la longueur de la bande.

Les moyens les plus fréquemment utilisés, qui permettent, soit d'enregistrer des informations sur des supports tels que les disques ou les bandes, soit de les lire soit enfin de réaliser l'une ou l'autre de ces deux fonctions, sont appelés "transducteurs magnétiques". Généralement, on associe à un support d'enregistrement un ou plusieurs transducteurs, le support défilant devant celui-ci ou ceux-ci. Pour simplifier, on supposera dans la suite de la description, qu'un seul transducteur est associé à une même support.

Un transducteur magnétique comprend un circuit magnétique, autour duquel est disposé un enroulement, et qui comporte un entrefer. Ce dernier est disposé à une distance très faible de la surface du support, comprise entre zéro et quelques dixièmes de microns.

L'enroulement comprend les fils électriques d'entrée et/ou sortie. Pour enregistrer des informations sur le support associé au transducteur, on alimente l'enroulement par un courant électrique dont on peut faire varier le sens ou la durée de passage dans celui-ci. Le support est ainsi soumis au champ magnétique d'intensité, de sens variables créé par le transducteur au voisinage immédiat de son entrefer (entre zéro et quelques dixièmes de microns), ce qui crée sur chaque piste du support une succession de petits domaines magnétiques qui ont des inductions magnétiques de sens opposé et dont la dimension est liée à la densité longitudinale d'enregistrement (pour un disque magnétique on appelle densité longitudinale le nombre de domaines magnétiques par unité de longueur mesurée suivant la circonférence de la piste). Ces domaines également appelés "domaines magnétiques élémentaires" sont répartis sur toute la longueur de la piste.

Inversement, lorsque les informations d'un support donnée défilant devant l'entrefer du transducteur qui lui est associé, ce dernier délivre des signaux électriques de lecture par l'intermédiaire de ses fils électriques d'entrée et/ou sortie, signaux qui sont envoyés à des circuits électroniques de lecture associés aux transducteurs.

La tendance actuelle du développement des transducteurs magnétiques est de produire suivant la technique de fabrication des circuits intégrés, des transducteurs de dimensions de plus en plus faibles (par exemple avec des entrefers dont les dimensions sont de l'ordre de un à quelques dixièmes de microns), de tels transducteurs étant par exemple fabriqués par la Compagnie Internationale pour l'Informatique CII-Honeywell Bull et décrit dans les brevets français No. 2.063.693 déposée le 28 Octobre 1969 par la Compagnie Internationale pour l'Informatique et le Commisariat à l'Ener- gie Atomique sous le titre: "Tête magnétique intégrée et procédé de fabrication de ladite tête" et le brevet No. 2.209.154 déposé le 3 juillet 1972 par la Compagnie Internationale pour l'Informatique sous le titre: "Transducteures magnétiques perfectionnés et leur procédé de fabrication".

Un tel transducteur comprend:

— d'une part, un circuit magnétique formé de deux pièces polaires en couches minces, réunies à une extrémité de manière à ce qu'elles soient couplées magnétiquement, et disposées à l'autre extrémités voisines du support d'enregistrement associé au transducteur de façon à former un entrefer. Ce dernier a une forme voisine de celle d'un rectangle et sa grande dimension est de l'ordre de la largeur radiale des pistes du support. Celui-ci est sensiblement perpendiculaire aux pièces polaires. L'une de celles-ci est disposée sur un substrat en matière isolante.

— d'autre part, un bobinage électrique formé de couches minces conductrices qui sont superposées dans à une direction perpendiculaire au plan des pièces polaires, et séparées les unes des autres par des couches minces électriquement isolantes (on rapelle que l'on désigne habituellement sous le nom de "couches minces", des couches dont l'épaisseur est de l'ordre de quelques angströms à quelques microns). Une partie due bobinage est comprise entre les deux pièces polaires de telle sorté qu'on peut dire que ces dernières forment une enveloppe de cette partie du bobinage.

Le support d'enregistrement magnétique associé au transducteur défile devant celui-ci perpendiculairement au plan des pièces polaires, perpendiculairement à la grande dimension de l'entrefer.

Dans la pratique courante, le matériau magnétique constituant les pièces polaires est de préférence anisotrope et son axe de difficile aimantation est dirigé perpendiculairement au support d'enregistrement.

On considère que chaque pièce polaire a une forme sensiblement rectangulaire. Sa plus grande dimension est normale au support d'enregistrement. L'axe de difficile aimantation du matériau magnétique constituant chaque pièce polaire est tel qu'il a même direction que la plus grande dimension de celle-ci.

On sait qui les domaines magnétiques élémentaires constituant les informations d'une piste du support magnétique d'enregistrement produisent un flux magnétique de fuite au voisinage immédiat de la surface du support. Ce flux magnétique est capté par l'entrefer du transducteur magnétique intégré qui lui est associé.

Si on désigne par $\phi_t$ le flux magnétique qui pénètre dans l'entrfer du transducteur, et $\phi_m$ le flux magnétique qui traverse le bobinage de celui-ci et permet donc d'engendrer un signal de lecture, on définit le coefficient de transfert T du transducteur magnétique intégré par la relation $T=\phi_m/\phi_t$. Pour que ce coefficient de transfert soit le plus grand possible, on montre que l'une des conditions à satisfaire est d'avoir une forte perméabilité des couches minces magnétiques constituant les pièces polaires et ce dans le sens de la circulation du flux. On voit que l'utilisation d'un matériau magnétique anisotrope dont l'axe de difficile aimantation est dirigé perpendiculairement au support d'enregistrement permet la réalisation de cette condition.

Les avantages d'un transducteur magnétique intégré dont les pièces polaires sont constituées d'un matériau magnétique anisotrope, transducteur décrit ci-dessus, sont exposés plus en détail dans le brevet 2.063.693 précité. On peut apporter des perfectionnements à de tels transducteurs de la manière décrite dans le brevet français No. 2.297.475 déposé le 10 Janvier 1975 par la Compagnie Internationale pour l'Informatique sous le titre: "Perfectionnements apportés aux structures de têtes magnétiques du type dit intégrées". Ces perfectionnements permettent d'accoître aussi bien le rendement de ces transducteurs à l'écriture qu'à la lecture. On rapelle que le rendement à l'écriture est défini comme le rapport entre le flux magnétique crée par le transducteur au voisinage de l'entrefer et le courant d'écriture traversant le bobinage, et que le rendement à la lecture est le rapport entre la tension disponible aux bornes du bobinage et le flux magnétique qui pénètre dans le transducteur au niveau de l'entrefer. Un transducteur intégré décrit dans le brevet No. 2.297.475 précité, comporte des pièces polaires qui présentent un rétrécissement au niveau de l'entrefer. La longueur du rétrécissement des pièces polaires dans un plan parallèle au support d'enregistrement et disposé en regard de celui-ci est égal à la grande dimension de l'entrefer. Elle est alors appelée "largeur de piste géométrique $LP_g$". Pour réaliser ce rétrécissement, les pièces polaires sont usinées par attaque ionique, sue une profondeur d'attaque égale à $p_a$ ($p_a$ est de l'ordre de quelques microns) ce qui définit des surfaces latérales concaves des pièces polaires dénommées $S_2$—$S_3$, $S'_2$—$S'_3$ respectivement situées de part et d'autre de l'entrefer. La surface des pièces polaires au niveau de l'entrefer, dans le plan de celui-ci, de largeur $LP_g$ et qui est parallèle au support d'enregistrement, est désigné par $S_1$. Si L est la largeur des pièces polaires (petite dimension de ces pièces) avant usinage par attaque ionique, on a généralement $L/LP_g$ sensiblement égal à 2.

A la lecture, on considère par exemple une piste déterminée P d'un disque magnétique d'axe de symétrie circulaire $Ax_p$ supposée isolée, et trois positions différentes que peut occuper le transducteur par rapport à cette piste, qui sont définies comme suit:

— dans la position $POS_0$, l'entrefer du transducteur est parfaitement centré en regard de la piste: cela signifie que quelquesoit le domaine magnétique élémentaire de la piste envisagée, l'axe $Ax_p$ de la piste en ce domaine et l'axe de symétrie $Ax_E$ de l'entrefer normal au plan des pièces polaires, sont alors situés dans un même plan normal au support, et sont parallèles entre eux.

Dans cette position, la tension du signal de lecture recueilli aux bornes du bobinage du transducteur est la plus grande possible, soit A;

Dans les positions $POS_1$ et $POS_2$ symétriques par rapport à $POS_0$ (l'axe $Ax_E$ de symétrie de l'entrefer est décalé d'une meme distance par rapport à l'axe $Ax_p$), la tension du signal recueilli aux bornes du bobinage est nulle.

Par définition, on appelle largeur de piste $LP_L$ à la lecture, la moitié de la largeur de l'espace situé de part et d'autre de la position $POS_0$ pour laquelle la tension du signal délivré par le bobinage est supérieure ou égale à 5% de A.

Dans la pratique courante, on constate que $LP_L$ est sensiblement supérieure à $LP_E$: en effet, au signal de lecture des informations de la piste P peut se superposer un autre signal, que la piste P soit isolée ou non.

Pour mieux comprendre les raisons de ce phénomène, il est nécessaire de rappeler les faits suivants:

— lors d'une première opération d'écriture d'une piste P d'un support d'enregistrement par le transducteur intégré qui lui est associé, le transducteur occupe par exemple la position $POS_0$ définit plus haut. L'axe de symétrie circulaire de la piste P alors écrite est appelé $Ax_p$. Si on suppose la piste P non isolée, on désigne par P' et P" les pistes adjacentes de la piste P écrites sur le support par le transducteur.

— lors d'une seconde opération d'écriture d'une même piste P, le transducteur occupe une position $POS'_0$, très voisine mais différente de $POS_0$ (le décalage $\delta$ entre ces deux positions est dans la pratique de l'ordre de quelques microns). Ceci est dû au fait que la précision du système de positionnement du transducteur en regard du support d'enregistrement a une limite maximum donnée égale au décalage $\delta$, en de çà de laquelle il est impossible d'aller. La nouvelle piste P écrite a donc un axe magnétique $Ax'_p$ décalé de $\delta$ par rapport à $Ax_p$.

Il est claire de, même que les deux pistes adjacentes P' et P" occupent sur le support une position légèrement différente que celle qu'elles occupaient à la suite de la première opération d'écriture.

Il existe donc de part et d'autre de la nouvelle piste P d'axe de symétrie circulaire $Ax'_p$, une zone dont la largeur est sensiblement égale au décalage $\delta$, qui contient des informations magnétiques ayant la mémoire de l'état antérieur du support, c'est-à-dire de l'état que celui-ci avait, par exemple, à la suite de la première opération de lecture.

On appelle "environnement immédiat de la piste P" l'ensemble constitué par les informations de la zone de largeur $\delta$ et celles des deux pistes voisines P' et P".

Le fait que la largeur de piste lue $LP_L$ est supérieure à la largeur d'écriture $LP_E$ est dûe essentiellement au phénomène suivant: si, lors de l'écriture, le flux magnétique crée par le transducteur permettant l'écriture des informations sur le support passe essentiellement par la surface $S_1$ (une petite partie de ce flux passe par les surfaces latérales concaves $S_2$—$S_3$—$S'_2$—$S'_3$), en revanche, lors de la lecture les surfaces latérales concaves $S_2$ et $S_3$, $S'_2$ et $S'_3$ captent une grande partie du flux magnétique produit par l'environnement magnétique immédiat de la piste P. On montre que la raison principale de ce phénomène provient de la forte anisotropie du matériau magnétique constituant les pièces polaires du transducteur.

Le signal délivré par le bobinage du transducteur provenant du flux magnétique produit par les informations de la piste P est appelé "signal utile S", alors que le signal délivré par le bobinage provenant du flux magnétique produit par l'environnement magnétique immédiat de la piste P est appelé "signal parasite ou signal de bruit B".

Dans la pratique courante, le rapport signal utile/signal de bruit S/B d'un tel transducteur peut être estimé trop faible, particulièrement pour certaines applications notamment lorsque le nombre de pistes du support par unité de longueur est grand (pour un disque magnétique ce nombre est appelé "densité radiale").

Dans la pratique, on connait des solutions permettant de remédier à cet inconvénient dont la plus courante consiste à réaliser un ensemble de deux transducteurs magnétiques (intégrés ou non) ayant des entrefers dont les grandes dimensions sont parallèles et différentes (on peut donc dire que les deux entrefers sont parallèles) et qui ont le même axe et le même plan de symétrie perpendiculaires à leur grande dimension (et parallèles à la direction de défilement du support).

Le premier entrefer dit entrefer d'écriture a une grande dimension (largeur de piste géométrique $LP_g$) sensiblement égale à la largeur de piste écrite sur le support $LP_E$, alors que le second entrefer, dit entrefer de lecture a une grande dimension $GD_L$ qui est plus faible que $LP_g$ et qui est telle que toute la surface de l'entrefer et des pièces polaires au niveau de celui-ci est disposée entièrement en regard de la piste que le transducteur de lecture est en train de lire.

Toutefois, un tel ensemble de deux transducteurs nécessite une grande précision dans son processus de réalisation, notamment dans la mise en coïncidence des axes de symétrie de la grande dimension des deux entrefers. Un tel ensemble est donc difficile à réaliser et par conséquent coûteux. On montre de plus que les rendements électromagnétiques de chacun des deux transducteurs tant à la lecture qu'à l'écriture sont relativement faibles.

On connait également d'autres solutions permettant d'améliorer le rapport signal utile/signal de bruit S/B obtenues par la réalisation d'un seul transducteur à un seul entrefer dont la grande dimension varie selon la nature de la fonction qu'il accomplit (écriture ou lecture): la grande dimension à la lecture est inférieure à la grande dimension à l'écriture. En d'autres termes, cela veur dire qu'un tel transducteur a un seul entrefer qui permet d'écrire sur une piste relativement large mais ne permet de lire que sur une piste relativement étroite.

Un tel transducteur est par exemple décrit et revendiqué dans le brevet français FR—A. 2.150.335 déposé par la Société I.B.M., le 3 Août 1972, avec une date de priorité conventionnelle du 21 Août 1971.

Ce transducteur comporte un conducteur intercalé entre deux éléments magnétisables formant chacun une pièce polaire, ces deux éléments formant une culasse magnétisable (que l'on peut appeler également circuit magnétique principal). Ces éléments magnétisables définissent un entrefer de transduction adjacent à un bord du conducteur. La culasse magnétique comporte une partie centrale et deux parties marginales entourant ladite partie centrale. La reluctance des parties marginales est plus forte que la réluctance des parties centrales. De ce fait, à la lecture, la participation au signal des parties marginales est atténuée à un point tel que le transducteur ne lit effectivement que sur la partie centrale de l'entrefer.

Malgré la reluctance élevée des parties marginales, on peut faire écrire le transducteur sur toute la largeur de la culasse magnétique (c'est-à-dire sur toute la largeur des pièces polaires) en utilisant un courant d'écriture considérablement supérieur à celui qui est nécessaire pour que la partie centrale écrive, un champ magnétique d'intensité suffisante pouvant être produit sur les parties marginales pour saturer le milieu d'enregistrement. De ce fait, il est nécessaire de dépenser une énergie beaucoup plus grande à l'écriture qu'à la lecture, et il risque d'en résulter un échauffement sensible du bobinage, ce qui est un grave inconvénient de ce transducteur.

En fonction de ce qui vient d'être dit plus haut pour le transducteur décrit dans le brevet français 2.150.335 précité, on voit que les parties marginales de ce transducteur constituent des moyens magnétiques de différenciation des fonctions de lecture et d'écriture.

Un tel transducteur permet de résoudre des problèmes de lecture et d'écriture pour des densités d'enregistrement de l'ordre de 25 pistes par centimère, la précision de positionnement $\Delta$ étant de l'ordre de quelques dizaines de microns. On peut d'ailleurs dire que dans le transducteur décrit dans le brevet 2.150.335 précité, l'intervention des parties marginales de la culasse magnétisables dans les phénomènes de lecture et d'écriture, s'effectue dans un espace à trois dimensions.

La présente invention permet de remédier aux inconvénients aussi bien de l'ensemble de deux transducteurs magnétiques ayant des entrefers dont les grandes dimensions sont parallèles et différentes, qu'au transducteur à un seul entrefer décrit dans le brevet français 2.150.335 précité.

Ceci est obtenu en réalisant les moyens de différenciation des fonctions de lecture et d'écriture sous la forme de couches minces magnétiques anisotropes de très faible épaisseur, cette dernière étant très inférieure à la largeur et à la longueur des couches minces, ces dernières étant disposées sur les pièces polaires constituant le circuit magnétique principal de part et d'autre de l'entrefer considéré à la lecture, et selon la direction définie par sa grande dimension, les couches minces étant disposées dans un plan parallèle au plan de l'entrefer et voisin de celui-ci.

Dans le transducteur selon l'invention, l'intervention des moyens de différenciation des fonctions de lecture et d'écriture s'effectue dans un espace à deux dimensions, pour des densités radiales d'informations d'environ 240 pistes par centimètre, comme il sera précisé plus loin à la page 16, ligne 12.

Selon l'invention, le transducteur de lecture/écriture d'un support magnétique d'informations qui défilent devant lui, les informations étant contenues à l'intérieur d'une pluralité de piste, qui comprend:

— un circuit magnétique formé de deux pièces polaires constituées par des couches minces magnétiques superposées et couplées magnétiquement à une extrémité et disposées à l'autre extrémité voisine du support sensiblement perpendiculairement à celui-ci pour former l'entrefer, lequel est parallèle au support et à sa grande dimension perpendiculaire au sens de défilement des informations d'une piste devant cet entrefer,
— un bobinage couplé magnétiquement au circuit magnétique,
— des moyens magnétiques de différenciation des fonctions de lecture et d'écriture disposés de telle sorte que la grande dimension de l'entrefer varie suivant la nature de la fonction accomplie par le transducteur, la grande dimension de l'entrefer à la lecture étant inférieure à la grande dimension à l'écriture, est caractérisé en ce que les moyens de différenciation des fonctions de lecture et d'écriture sont constitués par des couches minces magnétiques anisotropes disposées sur les pièces polaires de part et d'autre de l'entrefer considérées à la lecture et selon la direction définie par sa grande dimension, dans un plan parallèle au plan de l'entrefer voisin de celui-ci, l'épaisseur des couches minces étant très inférieure à leur largeur et à leur longueur.

D'autres caractéristiques et avantages de la présente invention apparaîtront dans la description suivante donnée à titre d'exemple non limitatif en se référant aux figures annexées. Sur ces dessins:

— La figure 1, rapelle comment est constituée un transducteur magnétique intégré de lecture et/ou d'écriture d'informations contenues sur un support selon l'art antérieur, tel que décrit dans les deux brevets 2.063.693 et 2.209.154 précités;
— Les figures 1a et 1b, étant des vues de trois-quart en perspective;
— La figure 1c, étant une vue en coupe selon un plan perpendiculaire au support et parallèle au sens de défilement de celui-ci;
— La figure 2, montre une forme de réalisation préférée d'un transducteur magnétique intégré selon l'art antérieur, tel que décrit dans le brevet 2.297.475 précité, les pièces polaires de ce transducteur comportant un rétrécissement au niveau de l'entrefer;
— La figure 2a, etant une vue de trois-quart en perspective;
— La figure 2b, étant une vue de dessus des pièces polaires;
— La figure 3, est un ensemble de figures 3a, 3b et 3c qui définissent respectivement la largeur de piste géométrique $LP_g$, la largeur de piste à l'écriture $LP_E$, la largeur de piste à la lecture $LP_L$;
— La figure 4, permet de mieux comprendre comment est constitué l'environnement magnétique immédiat d'une piste P d'un support d'enregistrement tel qu'un disque magnétique;
— La figure 5, est une vue de dessous très schématique d'un ensemble de deux transducteurs, dont l'un accomplit la fonction d'écriture et l'autre la fonction de lecture, la grande dimension de l'entrefer du transducteur d'écriture étant sensiblement supérieure à la grande dimension de l'entrefer du transducteur de lecture, selon l'art antérieur.
— La figure 6, estune vue de côté des pièces polaires considérées au niveau de l'entrefer, d'un premier exemple de réalisation d'un transducteur magnétique intégré selon l'invention;
— La figure 7, représente un second mode de réalisation préférée d'un transducteur magnétique intégré selon l'invention;
— La figure 7a, étant une vue de dessus des pièces polaires considérées au niveau de l'intrefer;
— la figure 7b, étant vue depuis le support d'enregistrement magnétique associé au transducteur;
— la figure 7c, étant une vue de trois-quart en perspective.

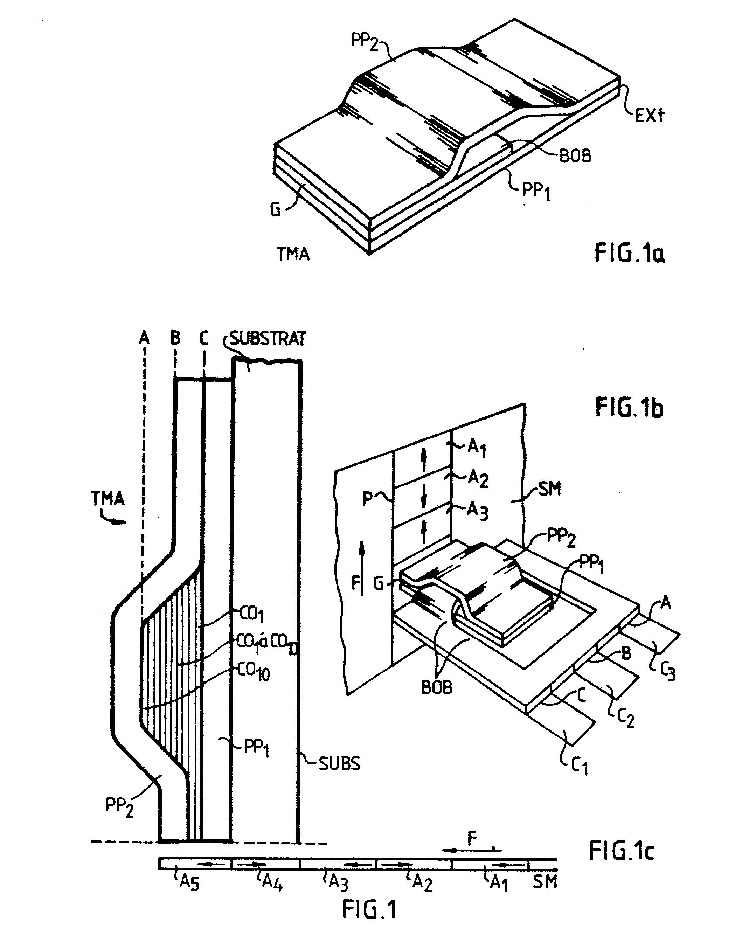

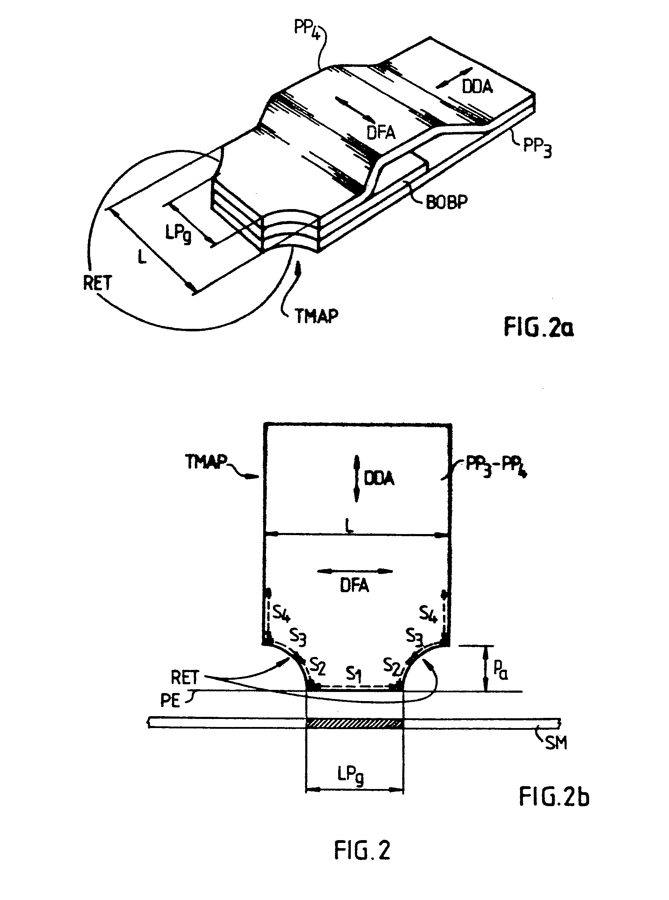

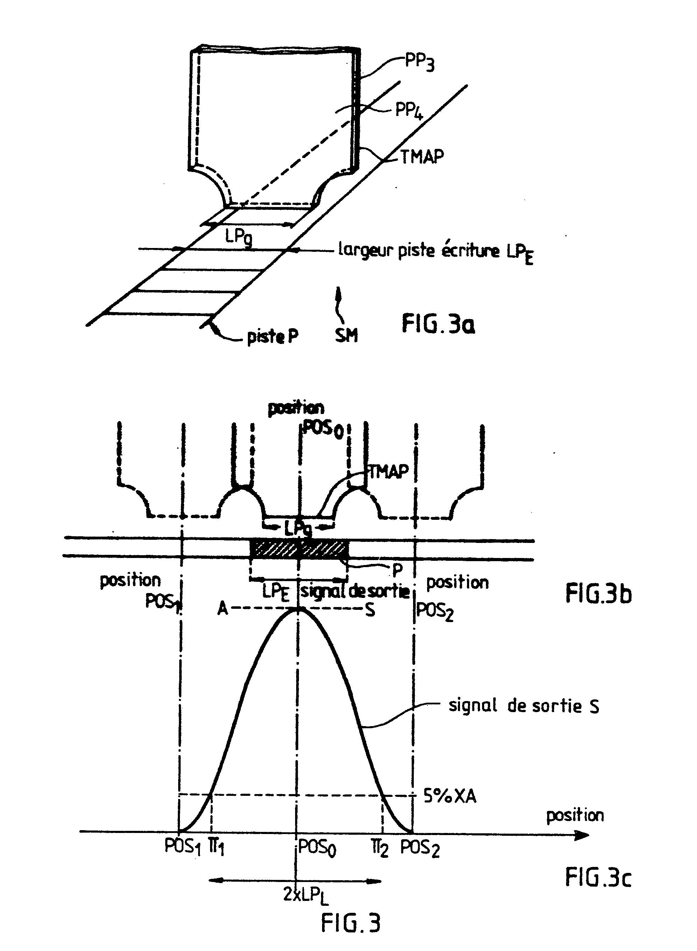

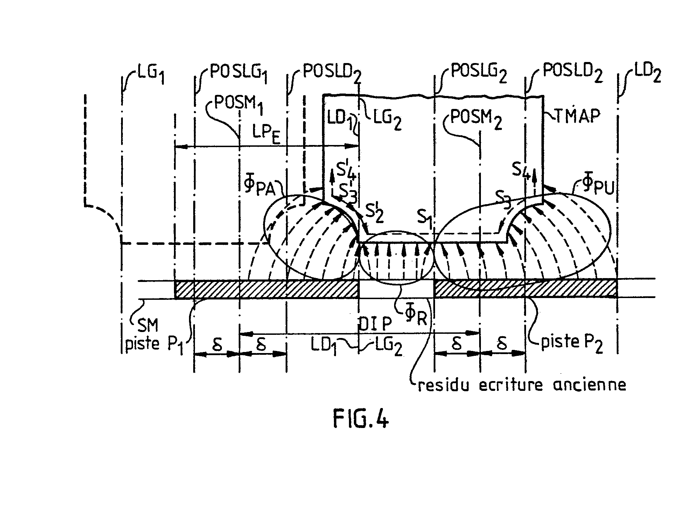

Afin de mieux comprendre comment est constitué le transducteur magnétique intégre selon l'invention, il est utile de faire quelques rappels, d'une part, sur les transducteurs magnétiques intégrés selon l'art antérieur, illustrès par les figures 1a, 1b, 1c, 2a et 2b et d'autre part sur les inconvénients que ceux-ci présentent à la lecture des informations illustrés par les figures 3a, 3b, 3c et 4.

On rappelle que de tels transducteurs magnétiques intégrés ont déjà été décrits dans les trois brevets français précités N°. 2.063.693, 2.209.154 et 2.297.475.

Ainsi qu'on peut le voir aux figures 1a à 1c, un transducteur magnétique intégré selon l'art antérieur TMA comprend, un circuit magnétique formé de deux pièces polaires magnétiques en couches minces $PP_1$ et $PP_2$ entièrement superposées et couplées magnétiquement à un bobinage BOB. Les pièces polaires $PP_1$ et $PP_2$ sont couplées magnétostatiquement entre elles en une première extrémité EXT et forment l'entrefer G à une autre extrémité. La pièce polaire $PP_1$ est déposée sur un substrat SUBS en matière isolante ainsi qu'on peut le voir à la figure 1c.

Aux figures 1b et 1c, le tranducteur TMA est représenté disposé en regard d'un support d'enregistrement SM dont on n'a représenté qu'une partie pour simplifier. Ce support comporte une pluralité de pistes d'enregistrement dont on ne montre que la piste P, laquelle comprend une pluralité de domaines magnétiques élémentaires dont seuls trois sont représentés à savoir les domaines $A_1$, $A_2$ et $A_3$ sur la figure 1b et cinq à savoir, $A_1$ à $A_5$ à la figure 1c. Le support SM qui défile dans le sens de la flèche F est par exemple un disque magnétique appartenant à une mémoire à disques. On sait que les mémoires à disques sont de plus en plus utilisées dans les systèmes de traitement de l'information en raison de leur capacité de stockage et du temps relativement court mis par les transducteures décriture et/ou lecture à accéder à une information contenue en un point quelconque du disque à partir du moment où ils reçoivent dudit système de traitement l'ordre d'accéder à cette information.

Les pièces polaires $PP_1$ et $PP_2$ sont généralement constituées d'un ensemble de plusieurs couches minces magnétiques et de couches minces isolantes empilées, chaque couche magnétique étant séparée de la couche voisine par une couche isolante. L'ensemble ainsi défini, qu'il comprenne une ou plusieurs couches minces magnétiques est désigné habituellement sous le nom général de "couches minces magnétiques".

Le bobinage BOB est formé d'une succession de couches minces conductrices et isolantes empilées selon une direction perpendiculaire au plan des pièces polaires magnétiques $PP_1$ et $PP_2$, une partie des couches minces conductrices et isolantes affleurant dans l'entrefer G. Les couches isolantes sont disposées entre les couches conductrices. Pour simplifier la figure 1c, on n'a représenté que les couches conductrices, à savoir $CO_1$ à $CO_{10}$ dans l'exemple de réalisation représenté sur cette même figure. Ces couches conductrices qui ont la même forme et sont de dimension différente sont reliées entre elles par des éléments conducteurs de raccordement non représentés, pour simplifier, aux figures 1a et 1c.

Dans la pratique courante, le bobinage BOB comporte un point milieu B, ses extrémités respectives étant C et A. De façon connue, dans une mémoire à disques comportant plusieurs transducteurs associés à plusieurs disques, on sélectionne tout transducteur dont on veut qu'il effectue une opération de lecture en envoyant une impulsion électrique de sélection sur son point milieu B.

Le bobinage BOB comporte trois conducteurs de sortie à savoir les conducteurs $C_1$, $C_2$, $C_3$ (figure 1b), qui sont raccordés aux circuits électroniques de lecture et/ou d'écriture de la mémoire à disques contenant le disque SM.

Dans la pratique courante, on réalise, de préférence, les transducteurs magnétiques intégrés de la manière représentée aux figures 2a et 2b (voir brevet N°. 2.297.475).

Ainsi qu'on peut le voir sur ces mêmes figures, qui représentent un tel transducteur TMAP, les pièces polaires $PP_3$ et $PP_4$ de ce dernier sont réalisées en un matériau magnétiquement anisotrope dont l'axe de difficile aimantation est orienté suivant la direction DDA perpendiculaire au support magnétique SM, qui reste tangente à la surface des pièces polaires. L'axe de facile aimantation des pièces polaires $PP_3$ et $PP_4$ est orienté selon la direction DFA perpendiculaire à la direction de difficile aimantation DDA et parallèle au support d'enregistrement SM. Il est clair que l'axe de facile aimantation est également tangent à la surface des pièces polaires $PP_3$ et $PP_4$.

Le transducteur TMAP comprend, au niveau de son entrefer GP, un rétrécissement RET de profondeur d'attaque $p_a$, généralement de l'ordre de 5 à 6 microns. Ce rétrécissement est tel que la longueur de l'entrefer $LP_g$ est sensiblement inférieur à la largeur L des pièces polaires en dehors de ce rétrécissement, c'est-à-dire la largeur des pièces polaires avant usinage. Ainsi qu'il a été dit plus haut, dans la pratique courante, le rapport $L/LP_g$ est de l'ordre de 2. Ainsi qu'on peut le voir à la figure 2b, le rétrécissement RET permet de définir les surfaces latérales concaves des pièces polaires $S_2$—$S_3$, $S'_2$—$S'_3$. La surface $S_2$ ($S'_2$) est telle

que l'angle qu'elle fait avec la normale au support SM est très faible alors que l'angle que fait la surface $S_3$ ($S'_3$) avec cette même normale au support d'enregistrement est plus grande et approche 90°.

On montre, dans le brevet français No. 2.297.475 précité, qu'un tel transducteur TMAP présentant un rétrécissement RET permet d'enregistrer sur le support SM des pistes d'enregistrement P de largeur $LP_E$ définie avec une grande précision.

Ainsi qu'on peut le voir aux figures 2b et 3a, cette dernière étant une vue de trois-quart en perspective montrant la partie des pièces polaires la plus proche d'un support d'enregistrement SM, le transducteur TMAP étant montré au-dessus d'une piste d'enregistrement P de ce support, la largeur de piste à l'écriture $LP_E$ est sensiblement égale ou légèrement supérieure à la largeur de piste géométrique $LP_g$ du transducteur TMAP (longueur de l'entrefer G). Ceci est dû a une grande concentration des lignes de flux au niveau de l'entrefer liée à l'anisotropie des pièces polaires et donc à la forte perméabilité magnétique suivant la direction DDA.

On designera par la suite sous le nom de $S_1$ la surface des pièces polaires dans le plan de l'entrefer GP, ce dernier qui est désigné par PE, étant parallèle au support d'enregistrement SM.

Les figures 3b et 3c permettent de mieux comprendre la définition de la largeur de piste à la lecture $LP_L$.

Dans la position $POS_0$, où l'entrefer GP du transducteur TMAP est parfaitement centré au-dessus de la piste P de largeur $LP_E$ supposée isolée (on voit que les axes de symétrie, contenus dans le plan de la figure, des pièces polaires du transducteur et de la piste P sont confondus) le signal délivré par le transducteur a une tension maximum A. Dans la position $POS_1$, la tension du signal délivré par le transducteur TMAP est nulle et il en est de même lorsque le transducteur occupe la position $POS_2$ symétrique de la position $POS_1$ par rapport à la position $POS_0$.

Lorsque le transducteur TMAP occupe une position comprise entre les positions $\pi_1$ et $\pi_2$ pour lesquelles le signal délivré est égal ou supérieur à 5% de A, on dit par définition que la distance entre les positions $\pi_1$ et $\pi_2$ est égale à $2 \times LP_L$.

Ainsi qu'il a été mentionné plus haut, le principal inconvénient d'un tel transducteur TMAP est que la largeur de lecture $LP_L$ est supérieure à la largeur d'écriture $LP_E$ (et par conséquent la largeur de piste géométrique $LP_g$). Les raisons en apparaîtront plus clairement au regard de la figure 4.

On considère sur le support magnétique d'enregistrement SM (supposé être un disque) une piste $P_1$ et une piste $P_2$. On suppose pour simplifier que la largeur d'écriture de ces pistes, égale à $LP_E$ est égale à la largeur de piste géométrique $LP_g$ du transducteur intégré selon l'art antérieur TMAP. On suppose en outre que chacune despistes $P_1$ et $P_2$ occupe, en moyenne, les positions $POSM_1$ et $POSM_2$ distantes d'une distance DIP. Ces positions sont symbolisées par les axes de symétrie des pistes $P_1$ et $P_2$ situés dans le plan de la figure (axe perpendiculaire à la surface du disque magnétique SM). On suppose de plus que ces axes représentent également des positions moyennes occupées par le transducteur TMAP lorsque celui-ci effectue, soit des opérations de lecture, soit des opérations d'écriture. Ces axes représentent donc les axes de symétrie des pièces polaires $PP_3$ et $PP_4$ du transducteur.

Dans la pratique courante, la distance DIP est légèrement supérieure à la largeur de piste à l'écriture $LP_E$. Ainsi pour un disque magnétique dont la densité radiale d'enregistrement est de l'ordre de 240 pistes par centimètre, la distance DIP est de l'ordre de 40 microns, alors que la longueur $LP_E$ est de l'ordre de 30 microns.

Ainsi qu'il a été écrit plus haut, le dispositif de la mémoire à disques qui contient le disque magnétique SM, qui permet de positionner le transducteur TMAP en regard des pistes $P_1$ et $P_2$ (et également de toutes les autres pistes du disque) a une précision $\delta$ de positionnement parfaitement déterminée de l'ordre de quelques microns. Cela signifie que lors des opérations de lecture ou d'écriture de la piste $P_1$, le transducteur magnétique intégré TMAP aura une position comprise entre une position $POSLG_1$ appelée "position limite gauche" et une position $POSLD_1$ appelée "position limite droite", ces positions $POSLG_1$ et $POSLD_1$ étant symétriques par rapport à la position moyenne $POSM_1$ et éloignées de celle-ci d'un distance $\delta$. Elles sont également symbolisées par des axes entraits interrompus à la figure 4.

Lorsque le transducteur TMAP occupe la position limite gauche $POSLG_1$, le bord gauche de son entrefer occupe une position désignée par $LG_1$, alors que lorsque le transducteur ocuupe la position limite droite $POSLD_1$, le bord droit de son entrefer occupe le position limite droit $LD_1$.

De même, lors des opérations d'écriture ou de lecture de la piste $P_2$, le transducteur TMAP occupera une position comprise entre les positions limites gauche et c'.oit $POSLG_2$ et $POSLD_2$ symétriques l'une de l'autre par rapport à la position moyenne $POSM_2$ et éloignées de celle-ci de la distance $\delta$. Dans ces conditions, le bord gauche de l'entrefer occupe la position $LG_2$ et le bord droit de l'entrefer la position $LD_2$. (voir figure 4). On admet pour simplifier que les positions du bord de l'entrefer $LD_1$ et $LG_2$ sont pratiquement confondues.

A la figure 4 on a supposé que les pistes $P_1$ et $P_2$ sont écrites lorsque le transducteur TMAP occupe respectivement les positions limites droits $POSLD_1$ et $POSLD_2$.

On suppose que le transducteur TAMP effectue les opérations de lecture de la piste $P_2$ en occupant la position limite gauche $POSLG_2$,

c'est-à-dire la position la plus défavorable pour la lecture de la piste $P_2$.

Dans ces conditions, le flux magnétique qui passe à travers les pièces polaires du transducteur TMAP et donne lieu à un signal de lecture, peut se décomposer en trois parties:

—1. un flux $\phi_{PU}$, dit flux utile, qui est le flux magnétique de fuit émis par les informations magnétiques de la piste $P_2$ telle qu'elle a été écrite (position $POSLD_2$);
—2. un flux $\phi_R$ dû aux résidus d'écriture d'une piste $P_2$ antérieurement écrite (le transducteur occupant alors une position différente de $POSLD_2$, par exemple la position $POSLG_2$);
—3. un flux dû à la piste adjacente $P_1$ dénommé $\phi_{PA}$. Les flux $\phi_R$ et $\phi_{PA}$ qui pénètrent respectivement par les surfaces $S_1$ et $S'_2$, $S'_3$ et $S'_4$ des pièces polaires et par l'entrefer GP du transducteur TMAP constitue un flux parasite

$$\phi_{PAR} = \phi_{PA} + \phi_R$$

émis par l'environnement magnétique immédiat de la piste $P_2$. On peut donc dire que cet environnement est constitué par le résidu d'écriture de la piste $P_2$ antérieurement écrite, et par la piste voisine $P_1$. A ce flux parasite correspond un signal de bruit B. Le flux utile $\phi_{PU}$ donne lieu à un signal de lecture S.

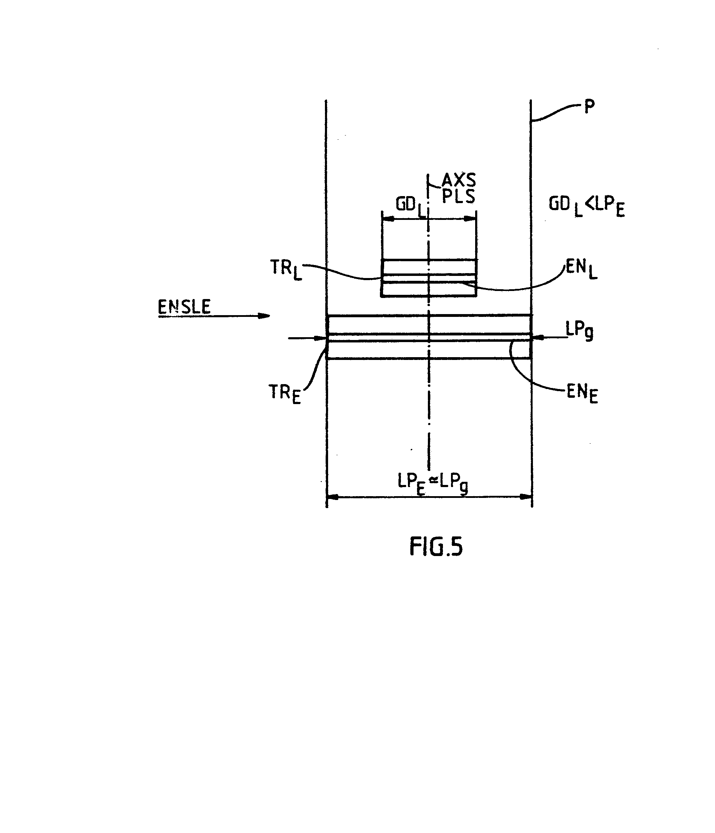

Dans la pratique courante, on cherche à améliorer le rapport S/B au moyen d'un ensemble de deux transducteures tel que celui représenté de façon schématique à la figure 5.

Ainsi qu'il a été écrit plus haut, un tel ensemble ENSLE est composé d'un transducteur de lecture $TR_L$ dont l'entrefer $EN_L$ a une grande dimension $GD_L$ et d'un transducteur d'écriture $TR_E$ dont l'entrefer $EN_E$ a une grande dimension $LP_g$ sensiblement égale à la largeur de piste P écrite sur le support d'enregistrement magnétique SM (lar geur de piste égale à $LP_E$). Les entrefers $EN_E$ et $EN_L$ ont même axe et plan de symérie perpendiculaires à leur grande dimension (et au plan de la figure 5).

Pour les raisons qui ont déjà indiquées plus haut, l'ensemble ENSLE des deux transducteurs $TR_E$ et $TR_L$ est onéreux et compliqué.

On peut également améliorer le rapport S/B en utilisant un seul transducteur ayant un seul entrefer comme le suggère le brevet 2.150.335 précité.

La grande dimension de l'entrefer du transducteur selon l'invention varie alors suivant la fonction (écriture ou lecture), qu'il accomplit. Ainsi la grande dimension de l'entrefer à la lecture $GD_L$ est inférieure à la gande dimension $GD_E$ qu'il prend à l'écriture, cette dernière étant telle que $GD_E$ est supérieure à $GD_L$ et GDE inférieure à $GD_{MAX}$ ou $GD_{MAX}$ est une grandeur maximum fonction de la largeur des pistes du support d'enregistrement qu'on cherche à obtenir.

Pour réaliser ceci, le transducteur comprend des moyens de differenciation des fonctions de lecture et d'écriture.

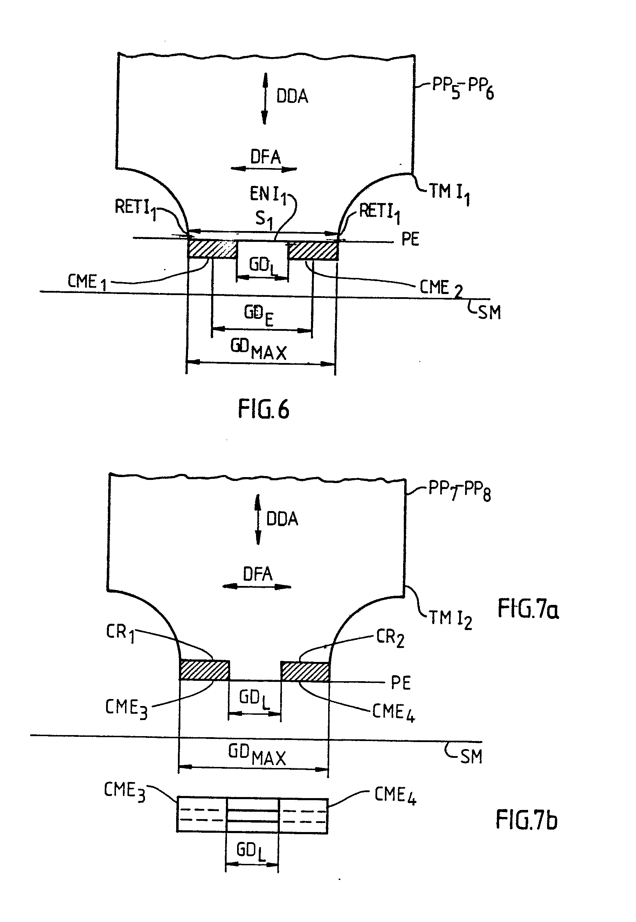

La figure 6 montre un premier exemple de réalisation d'un transducteur $TMI_1$ selon l'invention ayant des pièces polaires $PP_5$ et $PP_6$ représentant un rétrécissement $RETI_1$, de largeur $GD_{MAX}$. On rappelle qu'on désigne par PE le plan parallèle au support d'enregistrement SM défini au niveau du rétrécissement par les faces des pièces polaires $PP_5$—$PP_6$, disposées en regard de ce dernier.

Selon l'invention, les moyens de différenciation des fonctions de lecture et d'écriture du transducteur $TMI_1$ sont constitués par deux couches magnétiques $CME_1$ et $CME_2$ anisotropes déposées de part et d'autre de la grande dimension $GD_L$ de l'entrefer considéré à la lecture et ce sur la surface des pièces polaires $PP_5$ et $PP_6$ ainsi que sur la surface des conducteurs et isolants constituant l'entrefer $ENI_1$ du transducteur, surface contenue dans le plan PE.

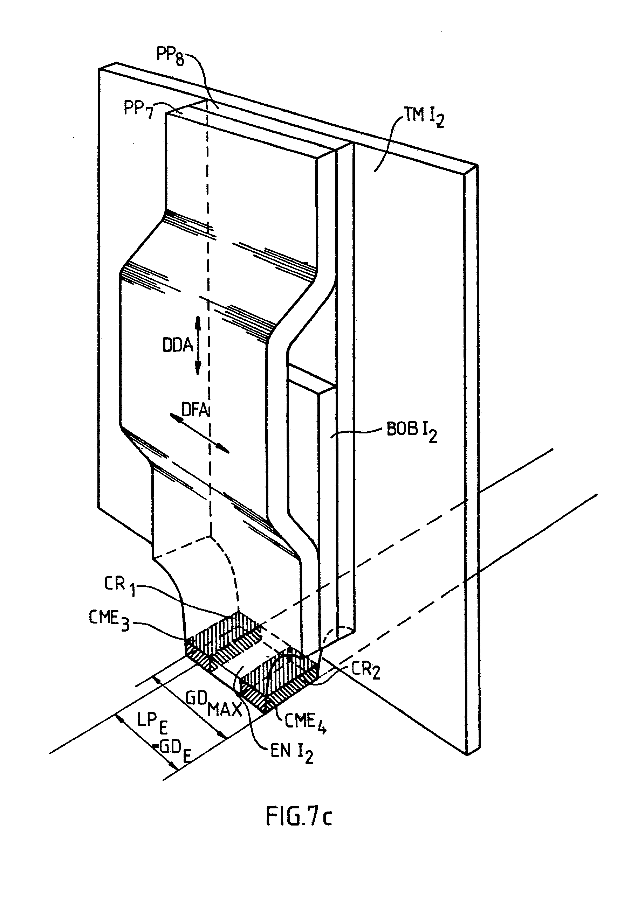

Les figures 7a, 7b et 7c, montrent un second exemple de réalisation $TMI_2$ plus avantageux d'un transducteur intégré selon l'invention.

On voit que les deux couches magnétiques $CME_3$ et $CME_4$ anisotropes disposées de part et d'autre de la grande dimension $GD_L$ de l'entrefer considéré à la lecture sont déposées dans des creux $CR_1$ et $CR_2$ pratiqués dans les pièces polaires $PP_7$ et $PP_8$ du transducteur (et également dans les couches isolantes et conductrices disposées entre ces pièces au niveau de l'entrefer). Dans ce cas, on voit clairement que la surface des couches $CME_3$ et $CME_4$ disposées en regard du support magnétique d'enregistrement SM est située dans le plan PE (ce dernier ayant la même définition que pour le transducteur $TMI_1$).

Aux figures 6, 7a et 7c on a représenté les directions de facile aimantation DFA et de difficile aimantation DDA des pièces polaires $PP_5$ et $PP_6$ d'une part et $PP_7$ et $PP_8$ d'autre part, celles-ci étant réalisées de préférence dans un matériau magnétique anisotrope.

Pour illustrer le fonctionnement d'un transducteur magnétique intégré selon l'invention on considère par exemple le transducteur $TMI_2$, son entrefer étant désigné par $ENI_2$.

A la lecture, la grande dimension de l'entrefer est égale à $GD_L$ ce qui signifie que les lignes de flux magnétique émises par les informations magnétiques de la piste P du support SM, de largeur $LP_E$ sont canalisées, au niveau de l'entrefer $ENI_2$ sur une largeur $GD_L$. Pratiquement aucune des lignes de flux émises par l'environnement magnétique immédiat de la piste P nepasse par l'entrefer et ne pénètre dans le bobinage $BOBI_2$ du transducteur. Ces dernières lignes de flux sont canalisées par les couches magnétiques $CME_3$ et $CME_4$ qui se comportent comme un shunt magnétique vis-à-vis de celles-ci. On peut dire que le rapport signal/bruit S/B du transducteur selon l'invention est, à la lecture supérieure à celui d'un transducteur selon l'art antérieur tel que le transducteur TMAP ou le transducteur $TR_L$ de l'ensemble EMSLE. On voit d'autre part qu'on peut considérer, à la lecture que les deux couches magnétiques $CME_3$ et $CME_4$ sont non seulement opaques au flux magnétique émis par l'environnement magnétique immédiat de la piste P mais également opaque au flux magnétique émis par les informations de cette même piste.

A l'écriture on montre que dès que le courant dans le bobinage atteient une certaine valeur $I_0$ la grande dimension de l'entrefer s'accroît, pour atteindre la valeur $GD_{MAX}$ pour une valeur de I légèrement supérieure à $I_0$ et désignée par $I_{MAX}$.

A l'écriture lorsque le courant traversant le bobinage s'accroît, la répartition de l'induction dans le matériau magnétique anisotrope des pièces polaires $PP_7$ et $PP_8$ évolue de façon telle que dans les couches magnétiques minces $CME_3$ et $CME_4$, apparaissent des composantes d'induction magnétique perpendiculaires au plan PE, qui participent au champ magnétique d'écriture; ces composantes apparaissent plus particulièrement à la jonction entre les couches $CME_3$ et $CME_4$ et la surface des pièces polaires non recouverte par celles-ci, ce qui a pour effet de lier la largeur d'écriture $LP_E$ au courant d'écriture.

En conclusion, on peut écrire que si le courant I dans le bobinage est compris entre $I_0$ et $I_{MAX}$, la grande dimension $GD_E$ à l'écriture dans l'entrefer $ENI_2$, est telle que $GD_L$ est inférieure à $GD_E$ lui-même inférieur ou égal à $GD_{MAX}$, et que pour $I < I_0$ on a $GD_E = GD_L$.

Le matériau constituant les couches $CME_3$ et $CME_4$ peut être par exemple constitué par du fer-nickel Fe-Ni, l'épaisseur de ces couches étant de l'ordre de 100 nm.

## Revendications

1. Transducteur de lecture/écriture d'un support magnétique (SM) d'informations qui défilent devant lui, les informations étant contenues à l'intérieur d'une pluralité de pistes, comprenant:

— un circuit magnétique formé de deux pièces polaires ($PP_5$—$PP_6$, $PP_7$—$PP_8$) constituées par des couches minces magnétiques superposées et couplées magnétiquement à une extrémité et disposées à l'autre extrémité voisine du support (SM) sensiblement perpendiculairement à celui-ci pour former l'entrefer ($ENI_1$, $ENI_2$) lequel est parallèle au support (SM) et à sa grande dimension perpendiculaire au sens de défilement des informations d'une piste devant cet entrefer,

— un bobinage ($BOBI_1$—$BOBI_2$) couplé magnétiquement au circuit magnétique,

— des moyens magnétiques de différenciation des fonctions de lecture et d'écriture disposés de telle sorte que la grande dimension (GD$_E$, GD$_L$) de l'entrefer (ENI$_1$, ENI$_2$) varie suivant la nature de la fonction accomplie par le transducteur (TMI$_1$, TMI$_2$), la grande dimension de l'entrefer à la lecture (GD$_L$) étant inférieure à la grande dimension à l'écriture (GD$_E$),

caractérisé en ce que les moyens de différenciation des fonctions de lecture et d'écriture sont constitués par des couches minces magnétiques anisotropes (CME$_1$—CME$_2$, CME$_3$—CME$_4$) disposées sur les pièces polaires de part et d'autre de l'entrefer considéré à la lecture et selon la direction définie par sa grande dimension, dans un plan parallèle au plan de l'entrefer (PE) et voisin de celui-ci, l'épaisseur des couches minces étant très inférieure à leur largeur et à sa longueur.

2. Transducteur selon la revendication 1 caractérisé en ce que les couches minces magnétiques sont disposées dans un creux (CR$_1$—CR$_2$) pratiqué dans les pièces polaires de telle sorte que le plan des couches magnétiques est confondu avec le plan de l'entrefer (PE).

**Patentansprüche**

1. Wandler zum Lesen/Schreiben auf einem magnetischen Informationsträger (SM), dessen Informationen vor ihm vorbeilaufen, wobei diese Informationen in einer Mehrzahl von Spuren enthalten sind, mit:

— einem Magnetkreis, der aus zwei Polstücken (PP$_5$—PP$_6$, PP$_7$—PP$_8$) gebildet ist, die aus übereinander angeordneten magnetischen Dünnschichten bestehen, welche an einem Ende magnetisch gekoppelt sind und am anderen Ende dem Träger (SM) benachbart und im wesentlichen senkrecht zu diesem angeordnet sind, um den Eisenspalt (ENI$_1$, ENI$_2$) zu bilden, welcher parallel zu dem Träger (SM) ist und dessen Hauptabmessung senkrecht zur Vorbeilaufrichtung der Informationen einer Spur vor diesem Eisenspalt ist,
— einer magnetisch mit dem Magnetkreis gekoppelten Wicklung (BOBI$_1$—BOBI$_2$),
— magnetischen Mitteln zur Trennung zwischen Lesefunktion und Schreibfunktion, wobei diese Mittel derart angeordnet sind, daß die Hauptabmessung (GD$_E$, GD$_L$) des Eisenspaltes (ENI$_1$, ENI$_2$) je nach der Art der von dem Wandler (TMI$_1$, TMI$_2$) ausgeführten Funktion variiert, und wobei die Hauptabmessung des Eisenspaltes für den Lesevorgang (GD$_L$) kleiner ist als die Hauptabmessung für die Schreibfunktion (GD$_E$),

dadurch gekennzeichnet, daß die Mittel zur Trennung von Schreibfunktion und Lesefunktion durch magnetische anisotrope Dünnschichten (CME$_1$—CME$_2$, CME$_3$—CME$_4$) gebildet sind, welche auf den Polstücken beiderseits des beim Lesevorgang betrachteten Eisenspaltes und entlang der durch seine Hauptabmessung definierten Richtung in einer Ebene angeordnet sind, die parallel zur Ebene des Eisenspaltes (PE) und dieser benachbart ist, wobei die Dicke der Dünnschichten sehr viel kleiner als ihre Breite und ihre Länge ist.

2. Wandler nach Anspruch 1, dadurch gekennzeichnet, daß die magnetischen Dünnschichten in einem Hohlraum (CR$_1$—CR$_2$) angeordnet sind, welcher in den Polstücken derart angebracht ist, daß die Ebene der Magnetschichten mit der Ebene des Eisenspaltes (PE) übereinstimmt.

**Claims**

1. Read/write transducer for a magnetic data carrier (SM) travelling in front of the same, the data being contained within a plurality of tracks, comprising:

— a magnetic circuit formed by two pole pieces (PP$_5$—PP$_6$, PP$_7$—PP$_8$) consisting of thin magnetic layers which are superposed and coupled magnetically at one extremity and are arranged, at the other extremity adjacent the carrier (SM), substantially perpendicular to the latter to form the air gap (ENI$_1$, ENI$_2$) which is parallel to the carrier (SM) and having its large dimension perpendicular to the direction of travel of the data of a track in front of this air gap,
— a coil (BOBI$_1$—BOBI$_2$) magnetically coupled to the magnetic circuit,
— magnetic means for differentiating the read and write functions arranged in a manner such that the large dimension (GD$_E$, GD$_L$) of the air gap (ENI$_1$, ENI$_2$) varies depending on the nature of the function implemented by the transducer (TMI$_1$, TMI$_2$), the large dimension of the air gap during the read operation (GD$_L$) being smaller than the large dimension during the write operation (GD$_E$),
— characterised in that the means for differentiating the read and write functions consist of thin anisotropic magnetic layers (CME$_1$—CME$_2$, CME$_3$—CME$_4$) arranged on the pole pieces at either side of the air gap in question during the read operation and along the direction defined by its large dimension, in a plane parallel to the plane of the air gap (PE) and adjacent to the same, the thickness of the thin layers being much smaller than their width and than their length.

2. Transducer according to Claim 1, characterised in that the thin magnetic layers are arranged in a recess (CR$_1$—CR$_2$) formed in the pole pieces in a manner such that the plane of the magnetic layers coincides with the plane of the air gap (PE).

0 040 994

FIG.1a

FIG.1b

FIG.1c

FIG.1

FIG.2a

FIG.2b

FIG.2

PP3

PP4

TMAP

largeur piste écriture LP$_E$

LP$_g$

piste P

SM

**FIG.3a**

position POS$_0$

TMAP

LP$_g$

position POS$_1$

A

LP$_E$ signal de sortie

P

position POS$_2$

**FIG.3b**

signal de sortie S

5% XA

position

POS$_1$ T$_1$

POS$_0$

T$_2$ POS$_2$

2 x LP$_L$

**FIG.3c**

**FIG.3**

FIG.4

4

0 040 994

FIG.5

5

FIG.6

FIG.7a

FIG.7b

FIG.7c